# EUROPEAN PATENT APPLICATION

(11) **EP 1 239 380 A2**
(43) Date of publication of application: **11.09.2002**
(21) Application number: 02004956.5
(22) Date of filing: 05.03.2002
(51) Int. Cl.: G06F 17/30

(54) **Information management apparatus maintaining data base consistency and recording medium recording data base consistency maintaining program**

(30) Priority: 06.03.2001 JP 2001062427; 15.01.2002 JP 2002006115
(71) Applicant: Sharp Kabushiki Kaisha, Osaka-shi Osaka (JP)
(72) Inventor: Kobayashi, Kiyoshi, Soraku-gun, Kyoto (JP); Shiraishi, Naoki, Yamatokoriyama-shi, Nara (JP)
(74) Representative: Müller - Hoffmann & Partner

(57) **Abstract**

An information processing apparatus (1) includes a data storing unit (22) for storing a first data base, a synchronizing process unit (16) for maintaining consistency of corresponding data by replacing data of a counterpart apparatus (6) storing a second data base different from the first data base, and a date and time information processing unit (26) for determining, between the first and second data bases, based'on consistency maintaining process time information representing the time of the last consistency maintaining process, and on data modification time information corresponding to each data included in the first data base and representing time of modification of each data, data included in the first data base of which time of modification is newer than the time of the last consistency maintaining process, to be the data of which consistency is to be maintained.

## Description

### BACKGROUND OF THE INVENTION

### Field of the Invention

The present invention relates to an information managing technique that can maintain consistency of mutually corresponding data stored separately, and particularly to an information managing technique maintaining data consistency between two or more apparatuses without increasing amount of data in the data bases.

### Description of the Background Art

Recently, information processing apparatuses have been widely used. It has become more frequent and common practice for an individual to use data bases such as an address book and a schedule book in a plurality of information processing apparatuses (for example, shared information processing apparatus such as a server, a personal information processing apparatus such as a desktop PC, and a portable information processing apparatus such as a PDA (Personal Digital Assistant)). Here, it is desired that data updated by one information processing apparatus and data corresponding to the updated data and held by another information processing apparatus have the same contents, that is, data consistency is maintained between the information processing apparatuses. The process for maintaining consistency of data among information processing apparatuses is referred to as "synchronizing process."

Japanese Patent Laying-Open No. 11-327987 discloses a data base management apparatus that maintains consistency of data among information processing apparatuses. The data base management apparatus includes a plurality of data base management apparatuses, a share setting circuit designating, among data bases, the scope of sharing of the stored corresponding data before executing the synchronizing process, and a synchronizing circuit for matching the contents of corresponding data among the data bases stored in data base management apparatuses that are made communicable with each other. The data base management apparatus includes a circuit for determining, when a plurality of data among the mutually corresponding data are modified from the last synchronizing process to the next synchronizing process, one side having priority, and replacing circuit for replacing data contents of the lower priority side with data contents of higher priority side, by giving an instruction to the synchronizing circuit.

In the data base management apparatus disclosed in Japanese Patent Laying-Open No. 11-327987, when mutually corresponding data are updated in a plurality of data base management apparatuses (in case of data collision), the data contents of lower priority side are replaced with the data contents of a preselected higher priority side. As a result, increase in the number of data in the data base can be prevented, and the amount of data that are transferred or processed at the time of synchronizing process can be reduced.

More specifically, in the data base management apparatus disclosed in Japanese Patent Laying-Open No. 11-327987, in each of two information processing apparatuses, a "dirty bit" is associated to a data unit (for example, in an address book, a unit of address book data of one person including name, address, telephone number and the like). A set of dirty bits related to respective data is stored in a table referred to as a "dirty bit list." The dirty bit represents, using a time point when a synchronizing process is performed between the information processing apparatuses, whether each data has been updated or not in each of the information processing apparatus thereafter. More specifically, according to this technique, the target data of which consistency should be maintained, that is, the data that has been updated after the time point of the last synchronizing process is extracted based on the dirty bit, and the synchronizing process is performed on the data, whereby data consistency can be maintained between the information processing apparatuses with high efficiency.

Japanese Patent Laying-Open No. 9-6693 discloses an information processing method which enables high speed, accurate and automatic synchronizing process among information processing apparatuses. The information processing method includes the steps of: adding, to data transmitted/received between information processing apparatuses, operation attribute information representing state of operation on the data and identical data recognition attribute information unique to the data; performing data synchronizing process between information processing apparatuses; and searching data that has been modified after the last synchronizing process, based on the operation attribute information and the identical data recognition attribute information added to each data, and controlling synchronizing process of the data obtained by the search, based on the added operation attribute information and the identical data recognition attribute information.

According to the information processing method disclosed in Japanese Patent Laying-Open No. 9-6693, between information processing apparatuses connected one to one, data that has been modified after last synchronizing process is searched, and on the data obtained through the search, high speed synchronizing process is possible, based on additional information of small capacity added to the data.

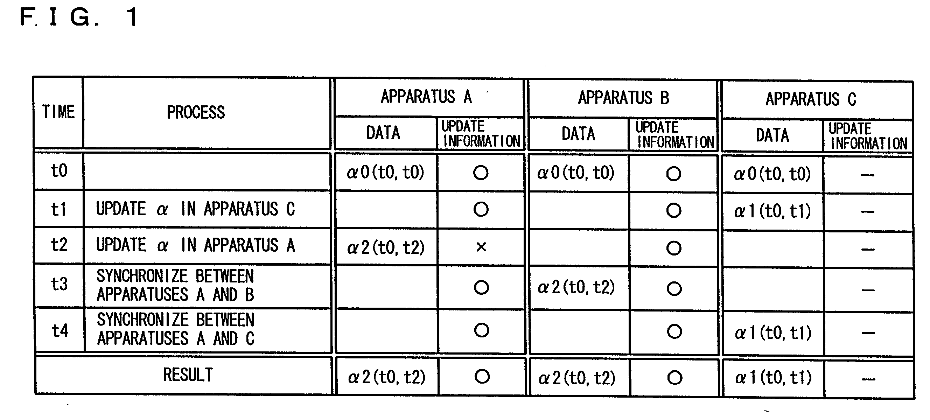

Assume that such a relation as described above is established between two information processing apparatuses A and B, for example, and an apparatus C not having the dirty bit list is simply added. When data is to be used among these three information processing apparatuses, in accordance with the technique disclosed in Japanese Patent Laying-Open No. 11-327987, consistency of the data as a whole cannot be maintained, as shown in Fig. 1. Fig. 1 shows a state in which data consistency is lost between three information processing apparatuses.

In Fig. 1, data α used by apparatuses A, B and C is shown. Here, at time point t0, the same data α0 is stored in each apparatus, at time point t1, the data is updated to data α1 in apparatus C, at time point t2, the data is updated to data α2 in apparatus A, synchronizing process is performed between apparatuses A and B at time point t3, and synchronizing process is performed between apparatuses A and C at time point t4. Therefore, it is assumed that the synchronizing process is performed with the apparatus A as a main apparatus, and that synchronizing process is not performed between apparatuses B and C.

In Fig. 1, update information represent update information for the data α indicated by the dirty bit. The reference character "○" represents that there has been a synchronizing process after the update of data α. The reference character "×" represents that no synchronizing process has been performed after the update of data α. The update information is defined based on the relation between apparatuses A and B as described above. Therefore, even when there is a synchronizing process performed between apparatuses A and C at time point t4, the update information for the data α of apparatus A has already been set to "0" at that time point. Therefore, the updated contents of apparatus A are not reflected to the apparatus C. Thus, data consistency as a whole cannot be maintained when the apparatus C is simply added.

It may be possible, when the apparatus C is added, to store dirty bits representing update information between apparatuses A and C, that is, update information with the time point of synchronizing process performed between apparatuses A and C being the reference, in apparatuses A and C. In that case, however, it becomes necessary to form dirty bit lists in apparatuses A and C when the apparatus C is added, and therefore, the process for utilizing data with a new apparatus becomes complicated.

By the technique disclosed in Japanese Patent Laying-Open No. 9-6693, though synchronizing process can be performed at high speed between information processing terminals connected one to one, synchronization between each of three or more information processing apparatuses connected at random is impossible.

### SUMMARY OF THE INVENTION

An object of the present invention is to provide an information management apparatus that facilitates consistency maintaining process when data is shared among a plurality of apparatuses and to provide a recording medium recording a program for information management.

Another object of the present invention is to provide an information management apparatus performing consistency maintaining process when data is shared among a plurality of apparatuses, in accordance with the state of modification of the information, and to provide a recording medium recording a program for information management.

A still further object of the present invention is to provide an information management apparatus for performing consistency maintaining process when data is shared among a plurality of apparatuses, adapted for two or more data bases, and to provide a recording medium recording a program for information management.

A still further object of the present invention is to provide an information management apparatus performing consistency maintaining process when data is shared among a plurality of apparatuses, in accordance with the state of modification of the information, for two or more data bases, and to provide a recording medium recording a program for information management.

A still further object of the present invention is to provide an information management apparatus performing, at high speed, consistency maintaining process when data is shared among a plurality of apparatuses, adapted for two or more data bases, and to provide a recording medium recording a program for information management.

The information management apparatus in accordance with the present invention comprises: a data base storing circuit for storing a first data base; a consistency maintaining circuit for performing consistency maintaining processes by replacing data of the first data base with data of a second data base different from the first data base; and a data determining circuit for designating as data of which consistency is to be maintained between the first and second data bases, data included in the first data base and having modification time newer than the time of the last consistency maintaining process, based on consistency maintaining process time information representing time when the last consistency maintaining process was performed, and based on data modification time information corresponding to each data included in the first data base and representing time when each the data is modified.

Based on the consistency maintaining process time information between the first and second data bases and the data modification time information of each data, when the data of the first data base has been modified after the last consistency maintaining process between the first and second data bases, the modified data is determined to be the data of which consistency is to be maintained. Thus, it becomes possible to reflect the contents modified by one information management apparatus to a data base stored in another information management apparatus. At this time, the consistency maintaining circuit maintains consistency of the corresponding data between the first data base and the second data-base that is different from the first data base, by replacing data. Therefore, the data amount is not increased by the consistency maintaining process. As the data modification time information, date and time of updating or the like generally attached to the data may be utilized. The consistency maintaining process time information may be stored in the information management apparatus storing the first data base or another information management apparatus storing the second data base. When the information is not stored in either of these apparatuses, it is considered that the consistency maintaining process is to be performed for the first time between these data bases, and after the end of the consistency maintaining process, the date and time thereof may be stored in either of the information management apparatus. Therefore, when the consistency maintaining process is to be performed with a new data base, preparation of the dirty bit list or the like as required in the abode described prior art is unnecessary, and hence use of the data with the new data base is facilitated. Therefore, it becomes easier to use data among a number of information management apparatuses.

More preferably, the information management apparatus includes a time information storing circuit storing consistency maintaining process time information.

As the consistency maintaining process time information is stored in the information management apparatus, the data of which consistency is to be maintained can be determined using the stored information when the consistency maintaining process is performed.

More preferably, the information management apparatus includes a time information obtaining circuit obtaining the consistency maintaining process time information from another information management apparatus that stores the second data base.

The consistency maintaining process time information is obtained from another information management apparatus as a counterpart of the consistency maintaining process, and the data of which consistency is to be maintained can be determined using the obtained information, when the consistency maintaining process is performed.

More preferably, the information management apparatus includes a data transmission circuit connected to the data determining circuit, for transmitting determined data to another information management apparatus storing the second data base.

As the data modified in an information management apparatus is transmitted to the information management apparatus as a counterpart of the consistency maintaining process, the modified contents can be reflected.

More preferably, the consistency maintaining circuit includes a circuit receiving data transmitted as the data of which consistency is to be maintained, from another information management apparatus storing the second data base, and a circuit for replacing the data corresponding to the received data contained in the first data base, with the received data.

The data modified in the information management apparatus as the counterpart of the consistency maintaining process is received and the data of the information management apparatus of interest is replaced by the received data, and therefore, the contents of modification can be reflected.

More preferably, the information management apparatus further includes a data base designating circuit designating a first data base as an object of the consistency maintaining process, among a plurality of data bases stored therein.

Thus, consistency maintaining process can be performed data base by data base, when a plurality of data bases are stored in the information management apparatus.

According to another aspect, the present invention provides a recording medium recording a program for implementing a method of performing consistency maintaining processes using a computer. The method comprises the step of storing a first data base; the step of performing consistency maintaining processes, by replacing data of the first data base with data of a second data base different from the first data base; and the step of designating as data of which consistency is to be maintained between the first and second data bases, data included in the first data base and having modification time newer than the time of the last consistency mentioning process, based on consistency maintaining process time information representing time when the last consistency maintaining process was performed, and based on data modification time information corresponding to each data included in the first data base and representing time when each the data is modified.

As the computer is operated using a program recorded on a recording medium, when a consistency maintaining process is to be performed with a new data base, it is unnecessary to prepare the dirty bit list or the like that was required in the above described prior art, and hence, use of the data with a new data base is facilitated. Thus, use of data among a large number of information management apparatuses is facilitated.

According to a still another aspect, the information management apparatus of the present invention comprises: data base storing circuit for storing a first data base; consistency maintaining circuit for perfuming consistency maintaining processes among the first data base and two or more data bases different from the first data base, by replacing data of the first data base with data of the two or more data bases; data determining circuit for designating as data of which consistency is to be maintained among the first data base and the two or more data bases, data included in the first data base and having modification time newer than the time of the last consistency mentioning process, based on consistency maintaining process time information representing time when the last consistency maintaining process was performed, and based on data modification time information corresponding to each data included in the first data base and representing time when each the data is modified; and data base determining circuit for determining an order of the two or more data bases as the object with which consistency of the designated data is to be maintained, in accordance with a predetermined priority.

Among two or more data bases, the order of the data bases of which data consistency is to be maintained is determined in accordance with the order of time of previous consistency maintaining processes (starting from the newer one or older one), priority stored in advance, or in the order of the time of establishment of connections among apparatuses respectively including data bases. Thus, data consistency can be maintained in accordance with the priority required by the user.

More preferably, the data base determining circuit includes a circuit for determining order of two or more data bases as the object of maintaining consistency of the determined data, in accordance with a priority represented as an order of time, starting from an older or newer one, of the consistency maintaining process, represented by the consistency maintaining process time information.

Among two or more data bases, it is possible to determine the order of data bases of which data consistency is to be maintained, based on the order of older (or newer) time of the last consistency maintaining process.

More preferably, the information management apparatus includes a priority storing circuit for storing the priority. The data base determining circuit includes a circuit for determining order of two or more data bases as the object of maintaining consistency of the determined data, in accordance with the priority stored in the priority storing circuit.

Among two or more data bases, it is possible to determine the order of the data bases, of which data consistency is to be maintained, based on the priority stored in advance.

More preferably, the information management apparatus includes a communication circuit communicating with apparatuses respectively storing two or more data bases, and a time point storing circuit storing the time point when communication by the communication circuit becomes possible. The data base determining circuit includes a circuit for determining the order of two or more data bases as the object of maintaining consistency of the determined data, in accordance with the time point stored in the time point storing circuit.

Among two or more data bases, it is possible to determine the order of data bases of which data consistency is to be maintained, in accordance with the order of time when connection between each of the apparatuses including data bases is established.

More preferably, the information management apparatus further includes a holding circuit holding, while communicating with a first apparatus among two or more apparatuses, a state in which communication with the second apparatus other than the first apparatus among the two or more apparatuses is possible.

The holding circuit holds communication state with two or more apparatuses. When data consistency is maintained through communication with the first apparatus, data consistency is maintained through communication with the second apparatus while holding the communication available state with the first apparatus, and data consistency with the first apparatus is again to be maintained, it is unnecessary to establish communication with the first apparatus again, as the communication available state with the first apparatus is held. Thus, the process time necessary for maintaining data consistency among two or more apparatuses can be reduced.

According to a still another aspect, the present invention provides a recording medium recording a program for implementing a method of performing consistency maintaining processes using a computer. The method comprises: the step of storing a first data base; the step of performing consistency maintaining processes among the first data base and two or more data bases different from the first data base, by replacing data of the first data base with data of the two or more data bases; the step of designating as data of which consistency is to be maintained among the first data base and the two or more data bases, data included in the first data base and having modification time newer than the time of the last consistency maintaining process, based on consistency maintaining process time information representing time when the last consistency maintaining process was performed, and based on data modification time information corresponding to each data included in the first data base and representing time when each the data is modified; and the step of determining an order of the two or more data bases as the object with which consistency of the designated data is to be maintained, in accordance with a predetermined priority.

By operating a computer using a program recorded on the recording medium, it becomes possible, among two or more data bases, to determine the order of the data bases of which data consistency is to be maintained, based on the order of time of the last consistency maintaining process starting from the older or newer one, priority stored in advance, or the order of establishing connection with apparatuses respectively including data bases. Thus, data consistency can be maintained in accordance with the priority required by the user.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a table representing a state in which data consistency is lost among three information processing apparatuses of the related art.
Fig. 2 is a block diagram representing a configuration of an information processing apparatus in accordance with a first embodiment of the present invention.
Fig. 3 shows date and time information stored in a date and time information storing unit of the information processing apparatus in accordance with the first embodiment of the present invention.
Fig. 4 represents synchronizing process date and time information stored in the date and time information storing unit of the information processing apparatus in accordance with the first embodiment of the present invention.
Figs. 5 and 6 are illustrations representing the synchronizing process performed by the information processing apparatus in accordance with the first embodiment of the present invention.
Fig. 7 is a flow chart representing the flow of control of the synchronizing process performed by the information processing apparatus in accordance with the first embodiment of the present invention.
Fig. 8 is a flow chart representing the flow of control of the process of obtaining synchronizing process date and time information, by the information processing apparatus in accordance with the first embodiment of the present invention.
Fig. 9 shows data transition in accordance with the operation of the information processing apparatus in accordance with the first embodiment of the present invention.
Fig. 10 is a block diagram representing a configuration of the information processing apparatus in accordance with a second embodiment of the present invention.
Fig. 11 represents execution order information stored in an execution order information storing unit of the information processing apparatus in accordance with the second embodiment of the present invention.
Fig. 12 is a flow chart representing the flow of control of the synchronizing process performed by the information processing apparatus in accordance with the second embodiment of the present invention.
Fig. 13 shows data transition in accordance with the operation of the information processing apparatus in accordance with the second embodiment of the present invention.
Fig. 14 is a flow chart representing the flow of control of the synchronizing process performed by the information processing apparatus in accordance with a third embodiment of the present invention.

### DESCRIPTION OF THE PREFERRED EMBODIMENTS

In the following, embodiments of the present invention will be described with reference to the figures. In the following description, corresponding portions are denoted by the same reference characters, and names and functions are the same. Therefore, detailed description thereof will not be repeated.

### First Embodiment

In the following, the first embodiment of the present invention will be described.

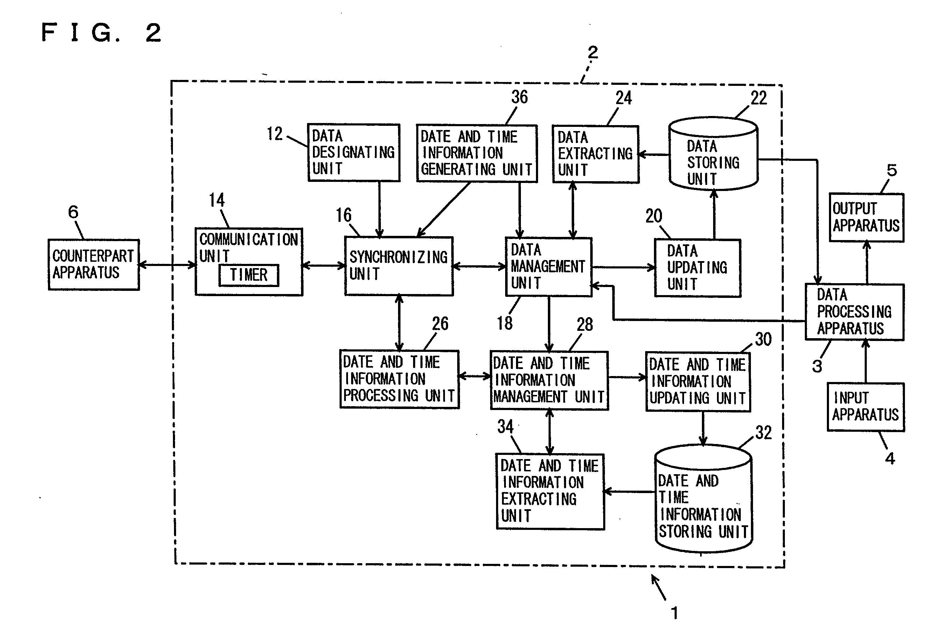

Fig. 2 is a control block diagram of the information processing apparatus in accordance with the present embodiment. The information processing apparatus 1 includes an information management apparatus 2, a data processing apparatus 3, an input apparatus 4 and an output apparatus 5.

The information processing apparatus 1 performs the synchronizing process (consistency maintaining process) for maintaining consistency of corresponding data among a plurality of data bases. As to the plurality of data bases, one data base, for example, is stored in information processing apparatus 1, and another data base is stored in a separate information processing apparatus. When the number of data bases is three or more, it may be the case that one data base is stored in information processing apparatus 1 and other two or more data bases are stored in two or more information processing apparatuses, respectively. Information processing apparatus 1 has only to store at least one data base, and it may store a plurality of data bases.

Here, "data base" refers to a set of pieces of information of the same type, for example, an address book, a schedule book, a mail box and the like. "Data" refers to a unit of information constituting the data base. More specifically, "data" represents address data of each entry (one person) of the address book, schedule data of one entry (one event) of the schedule book, mail data of one entry (one message) of the mail box and so on. In the following, it is considered that the data is contained in the data base, unless specified otherwise.

"Maintain consistency" refers to an operation that, when data of a certain data base is modified, the modification is reflected on data corresponding to that data in another data base. More specifically, it refers to an operation that the corresponding data is modified to be the same as the modified data.

"Synchronizing process" refers to the process for maintaining consistency of respective data among data bases.

Information management apparatus 2 includes a data designating unit 12, a communication unit 14, a synchronizing unit 16, a data management unit 18, a data updating unit 20, a data storing unit 22, a data extracting unit 24, a date and time information processing unit 26, a date and time information processing unit 26, a date and time information management unit 28, a date and time information updating unit 30, a date and time information storing unit 32, a date and time information extracting unit 34 and a date and time information generating unit 36.

Data designating unit 12 designates a data base as an object on which the synchronizing process is to be performed. Communication unit 14 controls communication with other information processing apparatuses. Synchronizing unit 16 manages overall synchronizing process as well as transmission/reception of the data of which consistency is to be maintained. Data storing unit 22 stores data. Data management unit 18 performs management of new creation, updating, deleting of data stored in data storing unit 22, sorting of data and so on. Data updating unit 20 performs processing such as new creation, updating, deletion of data in data storing unit 22, in accordance with an instruction from data management unit 18. Data extracting unit 24 extracts data designated by data management unit 18 from data storing unit 22.

Date and time information storing unit 32 stores date and time information. Here, the date and time information includes synchronize process date and time information representing date and time when the synchronizing process with other data base was performed last time, and the date and time information representing date and time of new creation, updating or deleting corresponding to each data in data storing unit 22. Date and time information management unit 28 manages updating or the like of the date and time information. Date and time information updating unit 30 updates the date and time information in date and time information storing unit 32 in accordance with an instruction from date and time information management unit 28. Date and time information extracting unit 34 extracts date and time information designated by date and time information management unit 28 from date and time information storing unit 32. Date and time information processing unit 26 determines data of which consistency is to be maintained, in accordance with the date and time information, for example. Date and time information generating unit 36 generates information related to the present date and time.

Data processing apparatus 3 reads data from data storing unit 22, processes the data, and saves the processed data in data storing unit 22 through data management unit 18 and data updating unit 20, so as to update data, for example. Data processing apparatus 3 has a function of newly generating data and saving the same in data storing unit 22, and the function of deleting data in data storing unit 22. Data processing by data processing apparatus 3 is performed based on an input from an input apparatus 4 such as a keyboard, a hand-writing input apparatus or the like. Output apparatus 5 includes a display on which the result of processing, for example, is output.

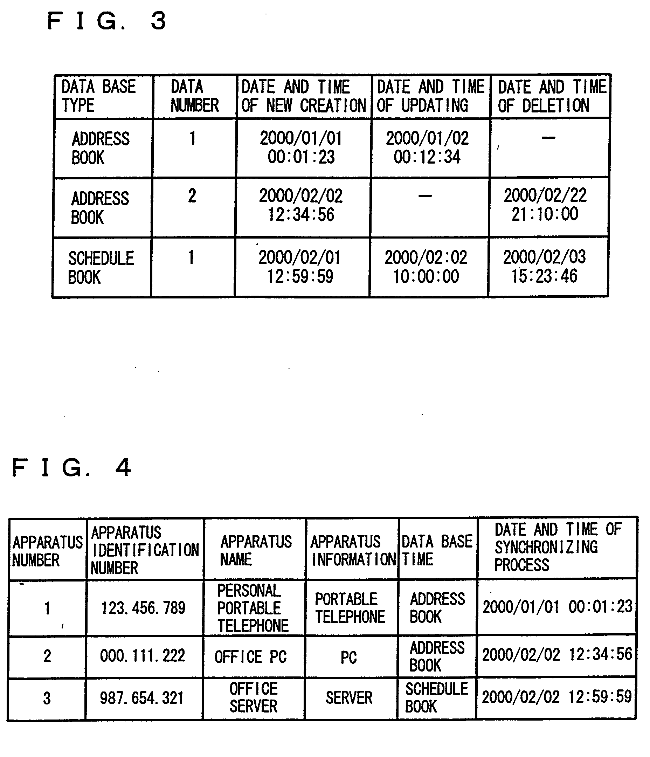

Fig. 3 represents date and time information of various data stored in or had been stored in data storing unit 22. Referring to Fig. 3, the date and time information is stored in date and time information storing unit 32 in correspondence with each data. Fig. 3 shows an example of the date and time information stored in date and time information storing unit 32. The date and time information includes additional information of each data (data base type, data number), date and time of new creation, date and time of updating, and date and time of deletion.

The data base type and the data number correlates the date and time information included in date and time information storing unit 32 with the data included in the data storing unit 22. Further, the data base type and the data number correlate the data stored in information processing apparatus 1 with the data stored in the counterpart apparatus 6. Here, "corresponding data" refers to the data related to the same person, for example, of the address book data, that is, the data that must inherently have the same contents.

Though the data and the date and time information are described as stored separately, these may be stored together. Further, the date and time of new creation, date and time of updating and date and time of deletion of the date and time information are added to the data. The added date and time information is used for controlling information management apparatus 2.

The synchronizing process date and time information is stored in date and time information storing unit 32. The synchronizing process date and time information is defined for each data base in information processing apparatus 1, data base by data base that is stored in an apparatus that can be the counterpart apparatus 6. For each combination of one data base in information processing apparatus 1 and one data base stored in the possible counterpart apparatus 6, the synchronizing process date and time information is defined.

Fig. 4 represents an example of the synchronizing process date and time information stored in date and time information storing unit 32. Fig. 4 represents the synchronizing process date and time information related to one data base in information processing apparatus 1. The synchronizing process date and time information includes additional information (apparatus number, apparatus identification number, apparatus name, apparatus information) of counterpart apparatus 6 storing the data base, the data base type and the date and time of the last synchronizing process. The apparatus number represents the number allocated to information processing apparatus 1, and apparatus identification number refers to an address on the network, for example.

Functions of information management apparatus 2 will be described in greater detail.

Communication unit 14 controls, when connected to counterpart apparatus 6, data communication with counterpart apparatus 6. Communication unit 4 is capable of controlling communication even when a plurality of counterpart apparatuses 6 are connected, that is, when a connection of one to multiple is established. The manner of connection may be wired or wireless. Communication unit 14 includes a timer, which timer is used for a time out process when waiting for a response from counterpart apparatus 6.

Data updating unit 20 receives data from data management unit 18, and updates the data by rewriting data corresponding to the received data (data in data storing unit 22). Data updating unit 20 deletes, upon reception of an instruction to delete data from data management unit 18, the designated data (data in data storing unit 22).

Data extracting unit 24 extracts data designated by data management unit 18 from data storing unit 22 and transmits to data management unit 18.

Data management unit 18 transmits the data received from synchronizing process unit 16 or data processing apparatus 3 to data transmitting unit 20. Data management unit 18 transmits the data designated by synchronizing process unit 16 to data extracting unit 24.

Data management unit 18 transmits the data extracted by data extracting unit 24 to synchronizing unit 16. Data management unit 18 transmits, upon reception of an instruction to delete data from data processing apparatus 3, the instruction to data updating unit 20. Data management unit 18 obtains, by an instruction from data processing apparatus 3 or by the synchronizing process, date and time information from date and time information generating unit 36 at the time point when data is newly formed, updated or deleted (hereinafter referred to as "data modification"). Data management unit 18 designates the data as the object of data modification, and transmits the contents of data modification as well as the obtained date and time information, as date and time information, to date and time information management unit 28. When the data received by synchronizing unit 16 at the time of synchronizing process includes information of the date and time of new formation, date and time of updating or date and time of deletion, data management unit 18 transmits the date and time information included in the data, in place of the date and time information from date and time information generating unit 36.

Date and time information updating unit 30 receives the synchronizing process date and time information from date and time information management unit 28, and updates the synchronizing process date and time information with respect to the data base as a counterpart of the synchronizing process. The date and time information updating unit 30 receives the contents of data modification as well as the date and time information from date and time information management unit 28, and updates the date and time information related to the data as the object of data modification.

Date and time information extracting unit 34 extracts from date and time information storing unit 32 the date and time information related to the data designated by date and time information management unit 28 or the synchronizing process date and time information related to the data base designated by the date and time information management unit 28, and transmits to date and time information management unit 28.

Date and time information management unit 28 transmits the date and time information or the synchronizing process date and time information received from data management unit 18 or date and time information processing unit 26 to date and time information updating unit 30. Date and time information management unit 28 has the date and time information extracting unit 34 extract the date and time information or the synchronizing process date and time information designated by date and time information processing unit 26, and transmits the extracted information to date and time information processing unit 26.

Date and time information processing unit 26 determines, based on the synchronizing process date and time information related to the data base as the counterpart of the synchronizing process and date and time information of each data included in the data base in data storing unit 22 corresponding to that data base, the data of which consistency is to be maintained among the data stored in data storing unit 22. Date and time information processing unit 26 transmits the result of determination to synchronizing process unit 26.

At this time, the synchronizing process date and time information and the date and time information are compared, and the data which has been subjected to data modification after the synchronizing process date and time is determined to be the data of which consistency is to be maintained. Thus, only the data that has been subjected to data modification after the last synchronizing process with the data base as the counterpart of the synchronizing process, that is, only the data of which consistency must be maintained, can be picked up. The synchronizing process date and time information may be obtained from date and time information storing unit 32 by giving an instruction to date and time information management unit 28. Alternatively, it may be obtained from the counterpart apparatus 6 through synchronizing process unit 16.

Date and time information is obtained from date and time information storing unit 32 by giving an instruction to date and time information management unit 28. When the synchronizing process date and time information related to the data base of counterpart apparatus 6 as the object of synchronizing process does not exist in date and time information storing unit 32 or in the counterpart apparatus, date and time information processing unit 26 determines that the synchronizing process is performed for the first time with the data base, and handles all the data included in the data base designated by data designating unit 16 as the object of synchronizing process.

Synchronizing unit 16 receives, based on the result of determination from date and time information processing unit 26, the data of which consistency is to be maintained from data management unit 18, and transmits to counterpart apparatus 6 through communication unit 14. Synchronizing unit 16 receives through communication unit 14, the data transmitted as the data of which consistency is to be maintained from counterpart apparatus 6.

Synchronizing unit 16 transmits the received data to data management unit 18, and instructs data modification with respect to the data. When the corresponding data does not exist in data storing unit 22, instruction is given to newly create the data in data storing unit 22. Synchronizing process unit 16 obtains the synchronizing process date and time information from counterpart apparatus 6 and transmits to date and time information processing unit 26. After the end of synchronizing process, synchronizing unit 16 obtains the date and time information at that time point from date and time information generating unit 36, and transmits the obtained information to date and time information processing unit 26, so as to update the synchronizing process date and time information in date and time information storing unit 32.

When the synchronizing process date and time information related to the data base as the object of synchronizing process does not exist in date and time information storing unit 32, the synchronizing process date and time information related to the data base is newly created and stored.

When the data base designated by data designating unit 12 is not stored in counterpart apparatus 6, synchronizing unit 16 copies the designated data base in its entirety in counterpart apparatus 6. Therefore, it is unnecessary that the data base stored in information management apparatus 2 is perfectly in one to one correspondence with the data base stored in counterpart apparatus 6. More specifically, only a part of the data base may correspond, or there may not be a corresponding data base.

As described above, information management apparatus 2 stores at least one data base (first data base), and is capable of performing a synchronizing process to maintain consistency of corresponding data with a data base (second data base) stored in counterpart apparatus 6. By date and time information processing unit 26, based on the synchronizing process date and time information representing the date and time of the last synchronizing process performed between the first and second data bases and on the date and time information corresponding to each data included in the first data base and representing the date and time information of modification of the data, data included in the first data base of which date and time of modification is newer than the date and time of the last synchronizing process is determined as the data of which consistency is to be maintained.

Thus, in information management apparatus 2, when the data in the first data base is modified after the last synchronizing process between the first and second data bases, the modified data can be determined as the data of which consistency is to be maintained. Therefore, it becomes possible to reflect the contents of modification to the second data base, by information management apparatus 2.

As the date and time information, the updating date and time information or the like added generally to the data may be utilized. The synchronizing process data and time information may be stored in information management apparatus 2 or counterpart apparatus 6. When the information is not stored in either of these, it is considered that the synchronizing process is performed for the first time between these data bases. Here, after the end of the synchronizing process, the date and time information at that time point may be stored either in information management apparatus 2 or counterpart apparatus 6. Thus, synchronizing process can easily be performed with a new data base.

Here, a control block (except for data storing unit 22 and date and time information storing unit 32) constituting information management apparatus 2 or data processing apparatus 3 may be implemented by a CPU (Central Processing Unit) or the like executing a program stored in a recording medium such as an ROM (Read Only Memory) or an RAM (Random Access Memory). Alternatively, hardware performing similar processing may be used. Further, hardware performing a part of the process and the CPU executing a program performing other processes or control of the hardware may be combined to implement the control block. Further, the CPU may be a single body, or a plurality of CPUs connected through a bus within the apparatus or through various communication paths may cooperate to execute the program.

The present invention encompasses such a program itself, as well as a computer readable recording medium storing the program. The recording medium may be a memory (for example, ROM) itself included in information processing apparatus 1, or it may a recording medium from which a program is read by an external storage apparatus, which is a program reading apparatus provided as an external memory apparatus of the information processing apparatus 1. In any case, the stored program may be configured to allow access and execution by a CPU. Alternatively, the CPU may read the program, the read program is loaded to a program storing area in information processing apparatus 1 and the program may be executed. It is assumed that the program for loading is stored in advance in information processing apparatus 1.

Here, the recording medium from which the program is read when the medium is inserted to the external storage apparatus refers to a recording medium that is formed separable from information processing apparatus 1. The recording medium includes a tape based medium such as a magnetic tape or a cassette tape, a magnetic disk based medium such as a flexible disk or a hard disk, an optical disc such as CD-ROM (Compact Disc-Read Only Memory) / MO (Magneto Optical Disc) / MD (Mini Disc) / DVD (Digital Versatile Disc), card based medium such as an IC card (including memory cards) / optical card, or a semiconductor memory based medium such as a mask ROM, EPROM (Erasable and Programmable ROM), EEPROM (Electrically Erasable and Programmable ROM) or a flash ROM. That is, any medium recording a program may be used. The contents stored in the recording medium are not limited to a program, and data may also be included.

Information processing apparatus 1 may have a system configuration that enables connection with a communication network including the Internet, and the program may be downloaded from a communication network. When the program is to be downloaded from the communication network, the program for downloading is stored in advance in information processing apparatus 1, or installed from a separate recording medium.

As for the program, it may be a program itself that implements the functional block by the CPU, or it may be program data or the like for forming a program that implements such a functional block through the processing by information processing apparatus 1. Such program and the program data may be taken in by accessing to a communication network including the Internet. Further, one taken from the Internet or one transmitted from information processing apparatus 1 to the Internet may also be used.

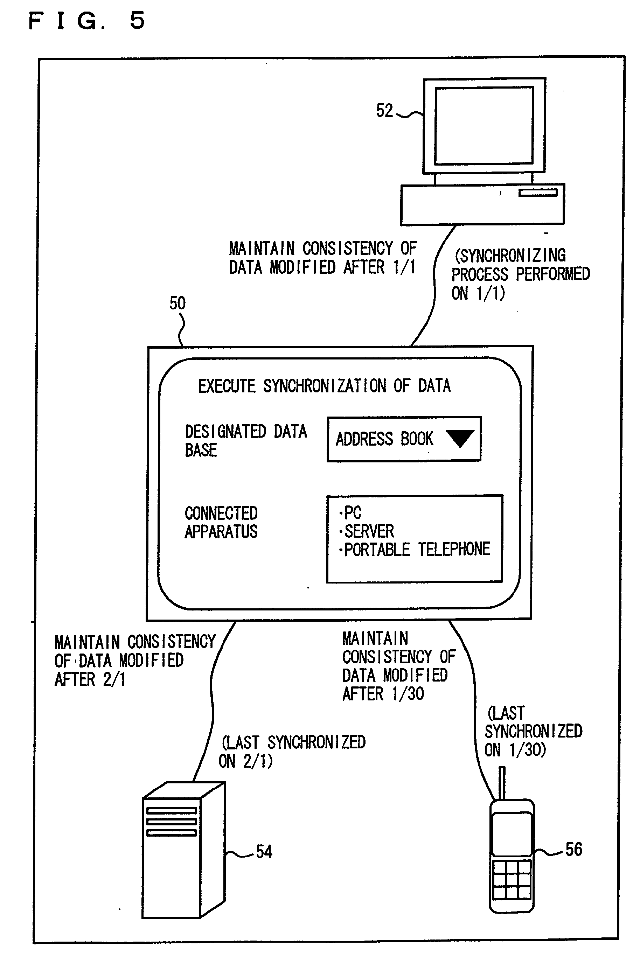

Fig. 5 is an illustration showing an example of the synchronizing process performed by using information processing apparatus 1. Here, an example is shown in which synchronizing process is performed between a data base stored in a personal digital assistant 50 as information processing apparatus 1 and data bases stored in a personal computer (hereinafter referred to as a PC) 52, a server 54 and a portable telephone 56 as counterpart apparatuses 6.

Personal digital assistant 50 has a touch panel display serving as an input apparatus 4 and output apparatus 5.

On the touch panel display, a counterpart apparatus to which it is connected at present is displayed. The touch panel display indicates data bases stored in personal digital assistant 50. The user designates, using the touch panel display, the data base that is the object of synchronizing process, among the indicated data bases. Therefore, the touch panel display also functions as a data designating unit 12. Fig. 5 shows an example in which an address book is designated.

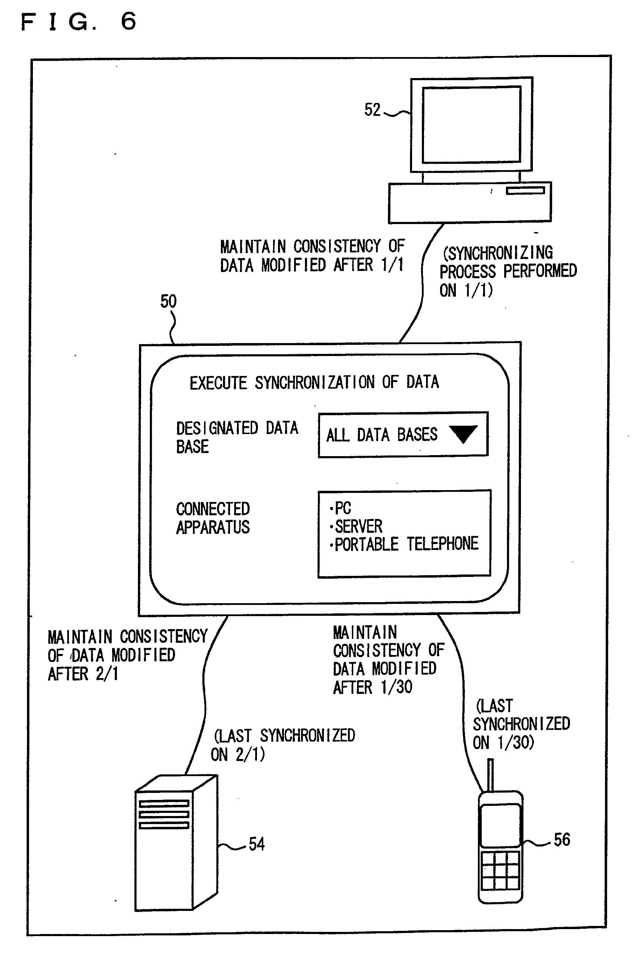

In personal digital assistant 50, PC 52, server 54 and portable telephone 56, data bases other than the address book may be stored. When data base is not designated by the user, an indication of "all data" appears as shown in Fig. 6 at the designated data base portion of the touch panel display. Fig. 6 is an example of the touch panel display on the personal digital assistant 50.

In the example shown in Fig. 5, it is assumed that the last synchronizing process performed on the address book of personal digital assistant 50 was January 1 with respect to PC 52, February 1 with respect to server 54, and January 30 with respect to portable telephone 56. Here, personal digital assistant 50 determines the data which has been modified after January 1 among the data contained in the address book to be the object of synchronizing process with PC 52, the data modified after February 1 as the object of synchronizing process with server 54, and the data modified after January 30 as the object of synchronizing process with portable telephone 56.

Personal digital assistant 50, PC 52, server 54 and portable telephone 56 may be connected simultaneously. Personal digital assistant 50 performs synchronizing process with each of PC 52, server 54 and portable telephone 56, in this order, for example. It is noted that after the synchronizing process with PC 52, synchronizing process with portable telephone 56 may be performed while maintaining connection with the PC 52. Here, "connection" refers to a state in which communication between each of the apparatuses is possible and synchronizing process is possible.

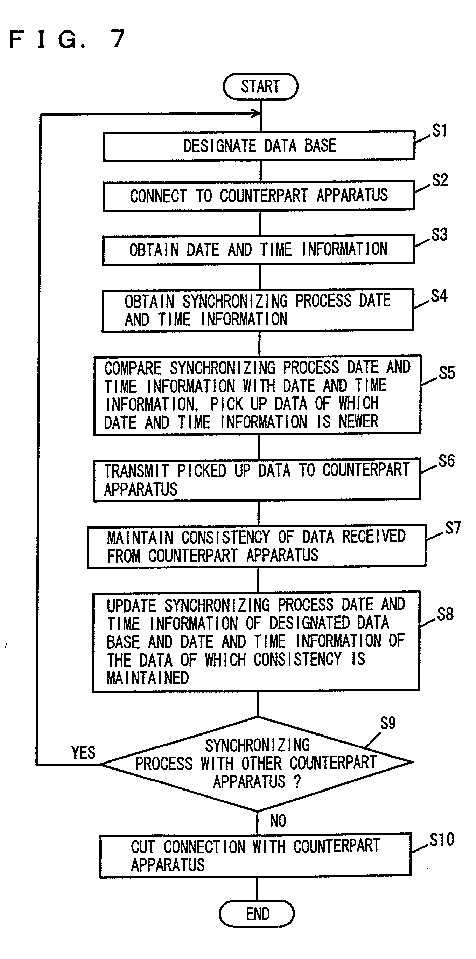

Referring to Fig. 7, the control of synchronizing process by personal digital assistant 50 as information processing apparatus 1 in accordance with the present invention will be described. In the following, the state is assumed to be as shown in Fig. 5, and the synchronizing process based on Figs. 2 and 7 will be described.

In step 1 (hereinafter, "step" will be represented by S), a data base as the object of synchronizing process is designated by the user through the touch panel display. Here, the address book, for example, is designated as the designated data base. When synchronizing process is to be performed on all the data bases stored in personal digital assistant 50, this step is unnecessary.

In S2, connection with counterpart apparatus 6, for example, PC 52 is established. In S3, date and time information processing unit 26 obtains the date and time information of the data included in the address book. In S4, the synchronizing process date and time information with the address book of PC 52 is obtained. The synchronizing process date and time information may be stored in date and time information storing unit 32. When the synchronizing process date and time information is not stored in date and time information storing unit 32, the information may be obtained from PC 52.

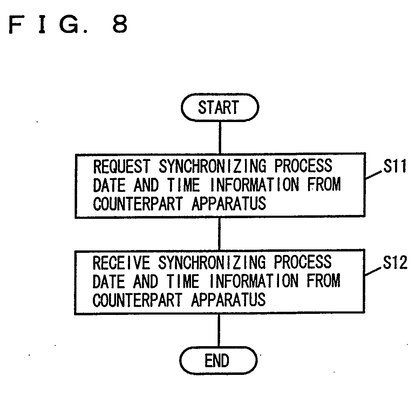

Here, in S11 shown in Fig. 8, synchronizing process unit 16 requests PC 52 for synchronizing process date and time information, and the synchronizing process date and time information is received from PC 52 in S12.

In S5, date and time information processing unit 26 compares the obtained date and time information with synchronizing process date and time information. Data having newer date and time information is picked up. More specifically, the data which has been modified by personal digital assistant 50 after the last synchronizing process (January 1) with the address book of PC 52 is picked up as the data of which consistency is to be maintained. In S5, when the synchronizing process date and time information related to the address book of PC 52 is stored neither in date and time information storing unit 32 nor in PC 52, date and time information processing unit 26 determines that it is the first synchronizing process with the address book of PC 52, and handles all the data of the address book as the object of synchronizing process.

In S6, synchronizing unit 16 transmits the data picked up by date and time information processing unit 26 and the date and time information of the data to PC 52. In S7, synchronizing unit 16 transmits the data received as the data of which consistency is to be maintained from PC 52 to data management unit 18, and instructs data modification of the data. Thus, consistency of the data can be maintained.

PC 52 also performs similar processing as personal digital assistant 50, and has a function of determining the data of which consistency is to be maintained and the function of transmitting the determined data to personal digital assistant 50.

When the corresponding data does not exist in portable digital assistant 50 in S7, the data is added to data storing unit 22 of personal digital assistant 50. In S7, when the corresponding data have been modified both in personal digital assistant 50 and PC 52, synchronizing process unit 16 compares the date and time information of respective data, and gives priority to the data having newer date and time information, that is, the data which is modified later.

In S8, data management unit 18 transmits the date and time information of the data included in the data received from PC 52 to date and time information management unit 28. Data management unit 18 updates the date and time information in date and time information storing unit 32 that is related to the data of which consistency is maintained. Synchronizing unit 16 obtains the date and time information at that time point from date and time information generating unit 36 and transmits to date and time information processing unit 26, so that the synchronizing process date and time information in date and time information storing unit 32 related to the address book of PC 52 is updated. Here, if it has been determined that it is the first synchronizing process with the address book of PC 52 (determined by date and time information processing unit 26 in S7), date and time information processing unit 26 newly registers in date and time information storing unit 32, the synchronizing process date and time information related to the address book of PC 52. Thus, synchronizing process with PC 52 is completed.

When the synchronizing process is to be performed on all the data bases, the process steps from S4 to S8 may be repeated for each of the data bases.

In S9, whether the synchronizing process is to be performed with other counterpart apparatuses 6, that is, server 54 and portable telephone 56 is determined. When a synchronizing process is to be performed with other counterpart apparatus 6 (YES in S9), the process returns to S1. Here, it is unnecessary to disconnect PC 52. Otherwise (NO in S9), the process proceeds to S10.

In S10, connection with PC 52 is cut, and the process is terminated.

The operation of information processing apparatus 1 in accordance with the present embodiment based on the configuration and flow chart as described above is as follows.

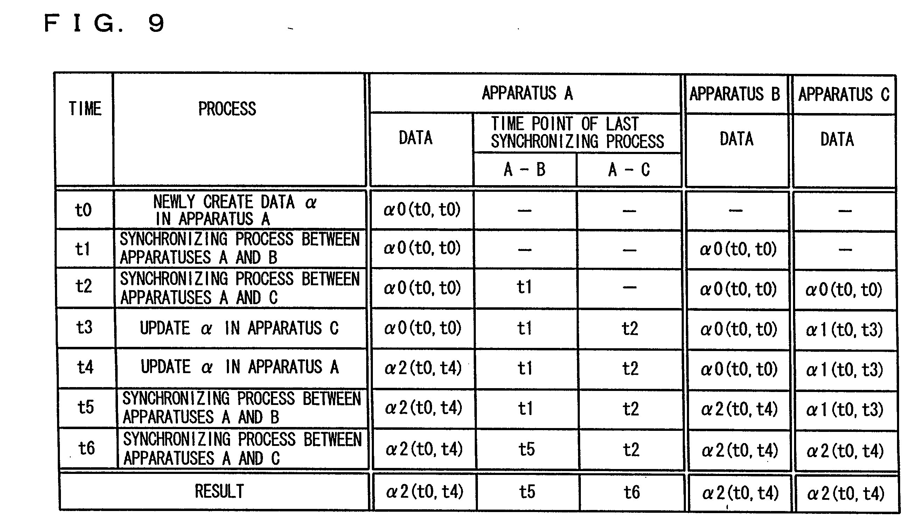

Fig. 9 shows a concept of data transition when the synchronizing process is performed in accordance with the flow chart. Apparatuses A, B and C correspond to personal digital assistant 50, PC 52 and server 54, respectively (portable telephone 56 is omitted). The corresponding data is represented as "α", and "α1" and "α2" represent data α updated separately. The time of new creation and time of updating of data α are represented as "α (time of new creation, time of updating)". In Fig. 9, the synchronizing process date and time information of apparatuses B and C are not shown.

In the synchronizing process performed between apparatuses A and B at time point t5, the time point of the last synchronizing process between these apparatuses is t1. Therefore, the data α2 (t0, t4) in apparatus A which has the time of updating newer than that is picked up as the object of the synchronizing process, and the data α0 (t0, t0) of apparatus B is replaced by the picked up data.

The synchronizing process between apparatuses A and C is at time point t6, and the time point of the last synchronizing process between these apparatuses is t2. Therefore, the data α2 (t0, t4) of apparatus A and data α1, (t0, t3) of apparatus C having newer time points of updating are picked up as the objects of synchronizing process. Here, the data α1 (t0, t3) of apparatus C is replaced by the data α2 (t0, t4) that has newer time point of updating.

As a result, in all apparatuses A, B and C, the data α is replaced by α2 (t0, t4) and the consistency is maintained.

As described above, according to the information management apparatus of the present embodiment, among first and second data bases, based on the consistency maintaining process time information representing the time of the last consistency maintaining process and the data modification time information representing the time of data modification corresponding to each data included in the first data base, the data among the first data base of which time of modification is newer than the time of the last consistency maintaining process is determined as the data of which consistency is to be maintained. Thus, it becomes possible to reflect the content modified in one information management apparatus to the data base stored in another information management apparatus. Here, as the use of data with the data base with which the consistency is to be newly maintained is facilitated, data can be used more easily among a large number of information management apparatuses.

### Second Embodiment

An information processing apparatus in accordance with the second embodiment of the present invention will be described in the following. In the present embodiment, a personal digital assistant, a PC, a server and a portable telephone are used as information processing apparatuses among which consistency is to be maintained. It is noted, however, that the present invention is applicable to other information processing apparatuses. Further, the present invention is also applicable to three or more information processing apparatuses.

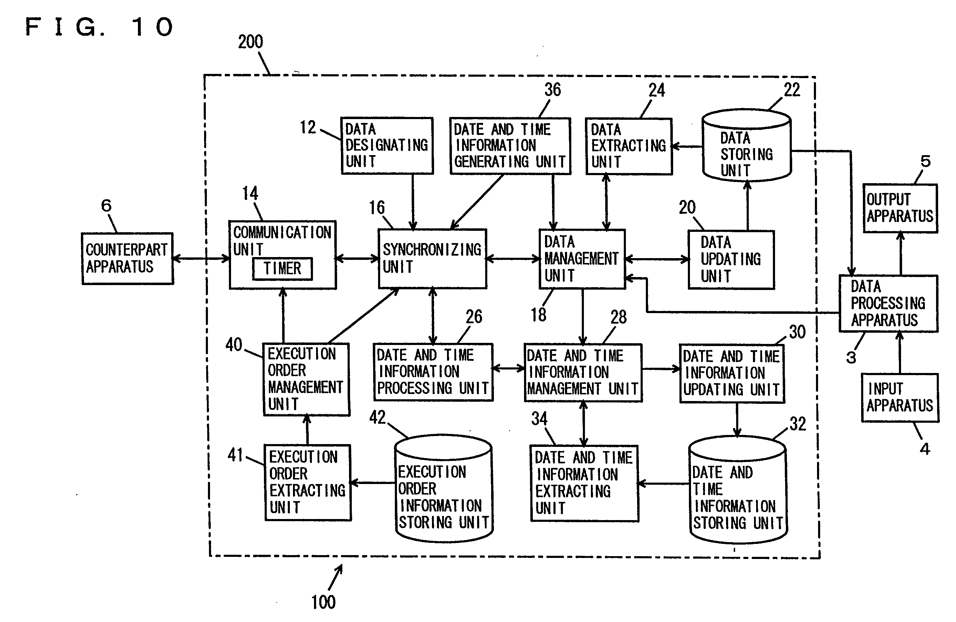

Referring to Fig. 10, information management apparatus 200 included in information processing apparatus 100 of the present embodiment includes, in addition to the configuration of information management apparatus 2 of the first embodiment described above, an execution order management unit 40, an execution order extracting unit 41 and an execution order information storing unit 42.

Execution order management unit 40 determines which of the counterpart apparatuses 6 and 7 is given priority to execute the synchronizing process. Execution order management unit 40 extracts the synchronizing process date and time information stored in date and time information storing unit 32 from date and time information extracting unit 34, and determines with which apparatus the synchronizing process should be performed earlier. When the synchronizing process is to be performed giving priority to the newer time point of synchronizing process date and time information, for example, and the counterpart of the latest synchronizing process is counterpart apparatus 7, execution order management unit 40 determines that the synchronizing process with counterpart apparatus 7 is to be executed first and the synchronizing process with counterpart apparatus 6 should be executed next. Execution order management unit 40 determines the order of executing the synchronizing process, based on the execution order information stored in execution order information storing unit 42. Execution order extracting unit 41 extracts the execution order information used by execution order management unit 40, from execution order information storing unit 42.

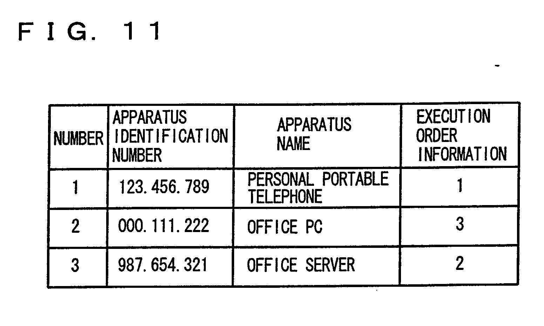

Fig. 11 represents the concept of an example of the execution order information stored in execution order information storing unit 42, representing the information related to one data base in information processing apparatus 100. The execution order information includes additional information of counterpart apparatuses 6 and 7 (apparatus number, apparatus identification number), and execution order information representing priority or the like when executing the synchronizing process. Execution order management unit 40 sets specific information as execution order information, and therefore it is capable of such a control that the synchronizing process is always executed first, last or the synchronizing process is not executed.

It is possible that personal digital assistant 50, PC 52, server 54 and portable telephone 56 are connected simultaneously. When personal digital assistant 50 is to execute the synchronizing process with three apparatuses, that is, PC 52, server 54 and portable telephone 56, the synchronizing process can be executed automatically in the order of older or newer date of the last synchronizing process, for example. Assume that the synchronizing process is executed starting from the counterpart apparatus having the oldest date of last synchronizing process, and that connection is not at all established among the apparatuses. Here, first, connection is established with PC 52 and the synchronizing process is performed. Thereafter, while maintaining the connection with PC 52, connection is automatically established with portable telephone 56, and the synchronizing process is performed. Thereafter, while maintaining connection with PC 52 and portable telephone 56, synchronizing process is automatically performed with server 54. Here, "connection" refers to a state that enables communication between two or more apparatuses, which allows synchronizing process.

Here, the priority refers to the order of the date and time information of synchronizing process starting from the newer one, the order based on the execution order information stored in the execution order information storing unit, the order of the last synchronizing process starting from the older one (or from the newer one), or the order of establishing the present connection state.

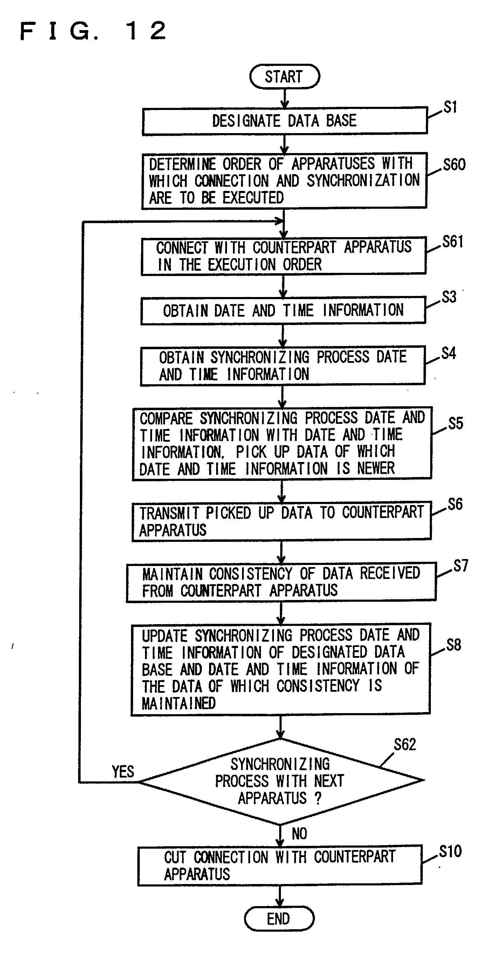

Referring to Fig. 12, the control of the program executed by the information processing apparatus (including information management apparatus 200) in accordance with the present embodiment will be described. In the flow chart described below, process steps corresponding to those of the flow chart shown in Fig. 7 are denoted by the same step numbers. The processes are also the same. Therefore, detailed description thereof will not be repeated where appropriate.

In S60, based on the execution order information, the order of the apparatuses with which connection and synchronizing process are to be performed is determined. When such a data as shown in Fig. 11 is given as the execution order information, the order in accordance with which connection and synchronizing process are executed is PC 52, portable telephone 56 and server 54. In S61, connection with the counterpart apparatus is established in accordance with the determined execution order.

In S62, whether or not there is an apparatus with which the synchronizing process is to be performed next is determined. ' When there is an apparatus with which the synchronizing process is to be performed (YES in S62), the flow returns to S61. Otherwise (NO in S62), the process proceeds to S10.

The operation of the information processing apparatus in accordance with the present embodiment based on the configuration and the flow chart described above is as follows. In the following, the priority is assumed to be the order of the last synchronizing process and the order based on a preset execution order information.

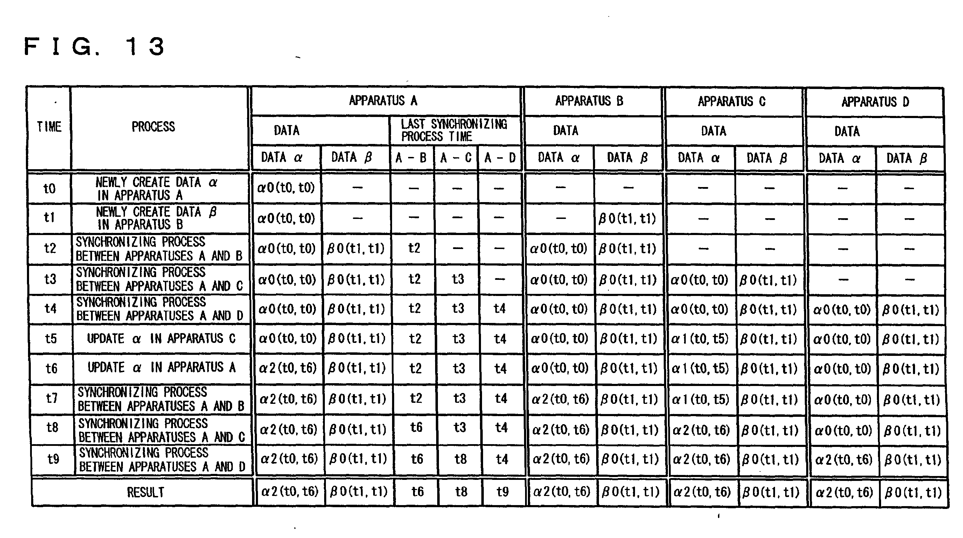

Fig. 13 shows a concept specifically showing data transition when the synchronizing process is performed. Apparatuses A, B, C and D correspond to personal digital assistant 50, PC 52, portable telephone 56 and server 56, respectively. The corresponding data is represented as "α", and "α1" and "α2" represent data α updated separately. The time point of new creation and the time point of updating of data α are represented as "α (time point of new creation, time point of updating)". For example, data α may be schedule data of oneself, and data β may represent schedule data of a supervisor. In Fig. 10, the synchronizing process date and time information of apparatuses B, C and D are not shown.

In the description of the first operation, it is assumed that the order for the apparatus A to execute synchronization with apparatuses B, C and D is determined based on the time point information (date and time) of the last executed synchronization.

In the synchronizing process performed at time point t7 between apparatuses A and B, the time point of the last synchronizing between these apparatuses is t2. Therefore, the data α2 (t0, t6) of apparatus A having newer time point of updating is picked up as the object of the synchronizing process. Thus, the data α0 (t0, t0) of apparatus B is replaced. As the data β0 (t1, t1) of apparatuses A and B have time point information older than time point t2, it is regarded as data which is not the object of the synchronizing process.

In the synchronizing process between apparatuses A and C at time point t8, the time point of the last synchronization between these apparatuses is t3. Therefore, data α2 (t0, t6) of apparatus A and the data α1 (t0, t5) of apparatus C having newer time points of updating are picked up as the objects of synchronizing process. Therefore, the data α1 (t0, t5) of apparatus C is replaced by the data α2 (t0, t6) having newer time point of updating. As the data β0 (t1, t1) of apparatuses A and C have the time point information older than the time point t2, it is regarded as the data which is not the object of synchronizing process.

In the synchronizing process between apparatuses A and D at time point t9, the time point of the last synchronization between these apparatuses is t4. Therefore, the data α2 (t0, t6) of apparatus A having newer time point of updating is picked up as the object of synchronizing process. Here, the data α0 (t0, t0) of apparatus B is replaced. As the data β0 (t1, t1) of apparatuses A and D have the time point information older than the time point t4, it is regarded as the data which is not the object of the synchronizing process.

As a result, data α is changed to α2 (t0, t6) and data β is β0 (t1, t1) in all the apparatuses A, B, C and D, and thus consistency is attained.

In the description of the second operation, the order for the apparatus A to execute synchronization with apparatuses B, C and D is based not on the time point of execution of the last synchronization but on the execution order information such as shown in Fig. 5. Here, apparatuses A, B, C and D correspond to personal digital assistant 50, portable telephone 56, server 54 and PC 52, respectively. The operation at each time point is the same as that described above. As a result of synchronizing process, the data α is changed to α2 (t0, t6) and the data β is β0 (t1, t1) in all the apparatuses A, B, C and D, and thus consistency is attained.

As described above, by the information processing apparatus of the present embodiment, the data stored in a plurality of information processing apparatuses can be synchronized as required by the user. Further, by determining respective priority, it is possible to attain the state in which consistency of arbitrary data stored in a plurality of information processing apparatus is maintained. As the priority is determined, the situation in which data consistency is lost can be avoided. When synchronizing process is to be executed between one information processing apparatus and a plurality of information processing apparatuses, connection is maintained with an apparatus with which synchronizing process has been done once and synchronizing process is to be performed again. Therefore, it is unnecessary to reestablish the connection. For example, when there are apparatuses A, B and C, the synchronizing process may be performed between apparatuses A and B first, the synchronizing process may then be performed between apparatuses A and C while maintaining the connection between apparatuses A and B, and thereafter synchronizing process may be performed between apparatuses A and B. Here, for the second synchronizing process between apparatuses A and B, the connection between the apparatuses A and B is maintained. Therefore, it is unnecessary to reestablish connection between apparatuses A and B.

### Third Embodiment

In the following, the information processing apparatus in accordance with the third embodiment of the present invention will be described. The hardware configuration of the information processing apparatus in accordance with the present embodiment is the same as that of the information processing apparatus in accordance with the second embodiment described above. Therefore, detailed description thereof will not be repeated where appropriate.

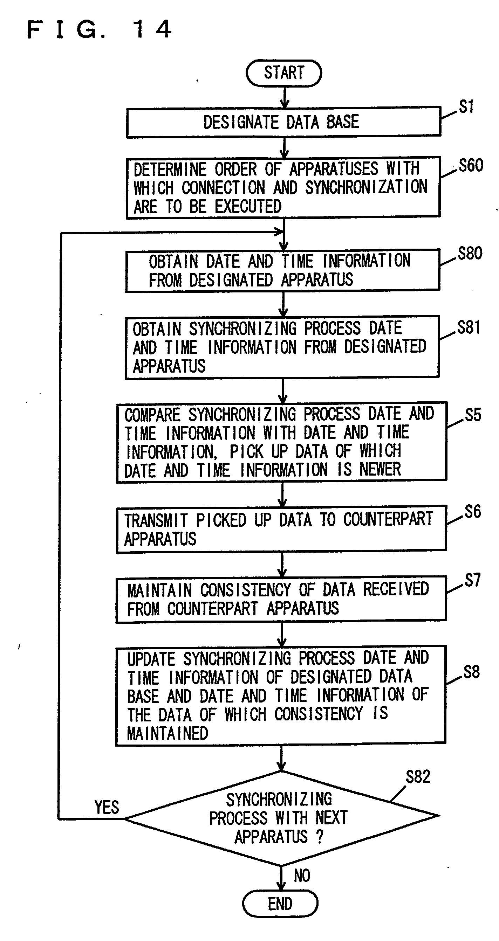

Referring to Fig. 14, the control of the program executed by the information processing apparatus of the present embodiment is as follows. In the flow chart below, the process steps that correspond to the flow chart of Figs. 7 and 12 described above are denoted by the same step numbers. The processes are also the same. Therefore, detailed description thereof will not be repeated.

In S1, a data base as the object of synchronizing process, for example, the address book (designated data base) is designated by the user through the touch panel display. When the synchronizing process is to be performed on all the data bases stored in personal digital assistant 50, execution of this step is unnecessary.

In S60, based on the execution order information, the order of the apparatuses with which connection and the synchronizing process are to be performed is determined. At this time, the order of executing synchronization may be determined starting from the older or newer time point, based on the time point of execution of the last synchronizing process, the order of executing synchronization may be determined based on the information as to which of the apparatuses is connected first, when the present state of connection is established, or the order of executing synchronization may be determined based on the execution order information.

In S80, date and time information is obtained from the designated counterpart apparatus. In S81, synchronizing process date and time information is obtained. Thereafter, the processes are the same as the first embodiment.

In S82, whether there is an apparatus with which synchronizing process is to be performed next is determined. When there is an apparatus with which the synchronizing process is to be performed next (YES in S82), the flow returns to S80. Otherwise (NO in S82), the process ends. More specifically, when there is no counterpart apparatus with which the synchronizing process is to be performed next, the process terminates. It is noted, however, that even when the process terminates, connection with the counterpart apparatus is maintained.

As described above, by the information processing apparatus of the present embodiment, utilizing the date and time information of executing the synchronization, and the date and time information of the new creation, updating or deleting data, the date and time information is exchanged among information processing apparatuses, and therefore when data consistency is to be maintained among three or more information processing apparatuses, it is possible to maintain data consistency among the information processing apparatuses by establishing synchronizing relation simultaneously, not dependent on the data stored in the information processing apparatus of which consistency is to be maintained.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An information management apparatus, comprising:
data base storing means (22) for storing a first data base;
consistency maintaining means (16) for performing consistency maintaining processes by replacing data of said first data base with data of a second data base different from said first data base; and
data determining means (26) for designating as data of which consistency is to be maintained between said first and second data bases, data included in said first data base and having modification time newer than the time of the last consistency maintaining process, based on consistency maintaining process time information representing time when the last consistency maintaining process was performed, and based on data modification time information corresponding to each data included in said first data base and representing time when each said data is modified.

2. The information management apparatus according to claim 1, further comprising
time information storing means (32) for storing said consistency maintaining process time information.

3. The information management apparatus according to claim 1, further comprising
time information obtaining means (14) for obtaining said consistency maintaining process time information from another information management apparatus (6) storing said second data base.

4. The information management apparatus according to claim 1, further comprising
data transmitting means (14) connected to said data determining means (26) for transmitting said data to another information management apparatus (6) storing said second data base.

5. The information management apparatus according to claim 1, wherein
said consistency maintaining means (16) includes
means for receiving data transmitted as the data of which consistency is maintained from another information management apparatus (6) storing said second data base, and
means for replacing data corresponding to said received data included in said first data base with said received data.

6. The information management apparatus (2) according to claim 1, further comprising
data base designating means (12) for designating, among a plurality of stored data bases, said first data base as an object of the consistency maintaining process.

7. A recording medium recording a program for implementing a method of performing consistency maintaining processes using a computer, wherein said method comprises:
the step of storing a first data base;
the step of (S7) performing consistency maintaining processes, by replacing data of said first data base with data of a second data base different from said first data base; and
the step of designating as data of which consistency is to be maintained between said first and second data bases, data included in said first data base and having modification time newer than the time of the last consistency maintaining process, based on consistency maintaining process time information representing time when the last consistency maintaining process was performed, and based on data modification time information corresponding to each data included in said first data base and representing time when each said data is modified.

8. An information management apparatus, comprising:
data base storing means (22) for storing a first data base;
consistency maintaining means (16) for performing consistency maintaining processes among said first data base and two or more data bases different from said first data base, by replacing data of said first data base with data of said two or more data bases;
data determining means (26) for designating as data of which consistency is to be maintained among said first data base and said two or more data bases, data included in said first data base and having modification time newer than the time of the last consistency maintaining process, based on consistency maintaining process time information representing time when the last consistency maintaining process was performed, and based on data modification time information corresponding to each data included in said first data base and representing time when each said data is modified; and
data base determining means (40) for determining an order of said two or more data bases as the object with which consistency of the designated data is to be maintained, in accordance with a predetermined priority.

9. The information management apparatus according to claim 8, wherein
said data base determining means (40) includes means for determining order of said two or more data bases as the object of maintaining consistency of said determined data, in accordance with priority represented as an order of time starting from older or newer one, of said consistency maintaining process, represented by said consistency maintaining process time information.

10. The information management apparatus according to claim 8, further comprising
priority storing means (42) for storing said priority; wherein
said data base determining means (40) includes means for determining the order of said two or more data bases as an object with which consistency of said determined data is to be maintained, in accordance with the priority stored in said priority storing means (42).

11. The information management apparatus according to claim 8, further comprising:
communication means (14) for communicating with apparatuses respectively storing said two or more data bases; and
time point storing means for storing a time point at which communication by said communication means (14) becomes possible; wherein
said data base determining means (40) includes means for determining an order of said two or more data bases as the object with which consistency of said determined data is to be maintained, in accordance with the time point stored in said time point storing means.

12. The information management apparatus according to claim 11, further comprising
holding means for holding, while communicating with a first apparatus among said two or more apparatuses, a state in which communication with a second apparatus other than said first apparatus among said two or more apparatuses is possible.

13. A recording medium recording a program for implementing a method of performing consistency maintaining processes using a computer, wherein said method comprises:
the step of storing a first data base;
the step (S7) of performing consistency maintaining processes among said first data base and two or more data bases different from said first data base, by replacing data of said first data base with data of said two or more data bases;
the step (S5) of designating as data of which consistency is to be maintained among said first data base and said two or more data bases, data included in said first data base and having modification time newer than the time of the last consistency maintaining process, based on consistency maintaining process time information representing time when the last consistency maintaining process was performed, and based on data modification time information corresponding to each data included in said first data base and representing time when each said data is modified; and
the step (S60) of determining an order of said two or more data bases as the object with which consistency of the designated data is to be maintained, in accordance with a predetermined priority.
